# FASCICULE DE BREVET EUROPEEN

(11) **EP 3 692 295 B1**
(45) Date de publication et mention de la délivrance du brevet: **03.11.2021**
(21) Numéro de dépôt: 18785291.8
(22) Date de dépôt: 03.10.2018
(51) Int. Cl.: F16L 33/01, F16L 11/08

(54) **EMBOUT DE FIXATION D'UNE CONDUITE FLEXIBLE, CONDUITE FLEXIBLE ET PROCÉDÉ ASSOCIÉS**
BEFESTIGUNGSENDSTÜCK FÜR EIN FLEXIBLES ROHR, ZUGEHÖRIGES FLEXIBLES ROHR UND ZUGEHÖRIGES VERFAHREN
ATTACHMENT END PIECE FOR A FLEXIBLE PIPE, ASSOCIATED FLEXIBLE PIPE AND ASSOCIATED METHOD

(30) Priorité: 03.10.2017 FR 1759235; 11.10.2017 FR 1759517
(43) Date de publication de la demande: 12.08.2020
(73) Titulaire: TECHNIP N-POWER, 92400 Courbevoie (FR)
(72) Inventeur: MATTEDI, Rafael, 2500 Copenhagen (DK); REIS, Felipe, 22281-080 Rio de Janeiro (BR); CORREA, Pedro Henrique, 22051-030 Rio de Janeiro (BR); REIS, Carlos Ronaldo, 22.750-320 Rio de Janeiro (BR); LUGIERY, Loic, 78230 Le Pecq (FR)
(74) Mandataire: Lavoix
(86) Numéro de dépôt international: PCT/EP2018/076901
(87) Numéro de publication internationale: WO 2019/068757

(56) Documents cités:
- EP-A1- 2 689 175
- US-A- 4 549 581
- US-A1- 2004 066 035
- US-A1- 2016 290 539
- US-B1- 6 592 153

## Description

La présente invention concerne un embout de fixation d'une conduite flexible de transport de fluide selon le préambule de la revendication 1.

Des conduites flexibles connues sont par exemple réalisées suivant les documents normatifs publiés par l'American Petroleum Institute (API), API 17J, 4e édition Mai 2014 et API RP 17B, 5e édition - Mai 2014.

Les conduites flexibles du type précité sont utilisées notamment en eau profonde dans l'industrie pétrolière et gazière. Elles s'étendent généralement à travers une étendue d'eau entre un ensemble de surface et un ensemble de fond. Ces conduites peuvent également s'étendre entre deux ensembles de surface.

L'ensemble de fond est destiné à recueillir le fluide exploité dans le fond de l'étendue d'eau. L'ensemble de surface est généralement flottant. Il est destiné à collecter et à distribuer le fluide. L'ensemble de surface peut être une plateforme semi-submersible, un FPSO ou un autre ensemble flottant.

D'une manière connue, une telle conduite comporte une structure interne tubulaire comprenant au moins une gaine tubulaire.

Dans certains cas, pour l'exploitation de fluides en eaux profondes, la conduite flexible présente une longueur supérieure à 800 m, voire supérieure à 1000 m ou à 2000 m pour des applications en eaux ultra-profondes.

Pour les grandes profondeurs, la pression hydrostatique s'appliquant à l'extérieur de la conduite devient critique lorsque la pression interne de la conduite diminue brusquement, par exemple lors d'un arrêt de production.

Dans ce cas, pour éviter l'écrasement (« collapse » en anglais) de la conduite sous l'effet de la différence de pression entre l'extérieur de la conduite et l'intérieur de la conduite, il est connu de placer dans la gaine tubulaire une carcasse interne. La carcasse interne est formée par exemple d'un feuillard métallique profilé, enroulé en spirale. Les spires du feuillard sont avantageusement agrafées les unes aux autres, ce qui permet de reprendre les efforts radiaux d'écrasement.

La conduite est alors désignée par le terme anglais « rough bore », en raison de la géométrie de la carcasse.

Une telle solution résout le problème de l'écrasement de la conduite, mais ne donne pas entière satisfaction, notamment aux grandes profondeurs.

En premier lieu, la présence d'une carcasse agrafée dans le passage de circulation de fluide créé des perturbations dans l'écoulement du fluide circulant dans le passage, qui peuvent conduire à des phénomènes indésirables. En outre, aux grandes profondeurs, les phénomènes de corrosion par fatigue deviennent très significatifs. La gaine tubulaire a par ailleurs tendance à fluer vers l'intérieur dans les déjoints de la carcasse.

Pour pallier ces problèmes, US 2015/0204472 décrit une conduite flexible comportant une structure composite de renfort comprenant une matrice et des fibres de renfort noyées dans la matrice.

Cette structure composite de renfort comprend un tube en matériau composite et présente à la fois la fonction d'une voûte de pression disposée à l'extérieur d'une gaine interne tubulaire et d'une carcasse disposée à l'intérieur de la gaine interne tubulaire.

Pour être utilisée, la conduite flexible du type précité doit être raccordée par exemple à un manifold sur l'ensemble de surface, ou à une autre conduite flexible. À cet effet, un embout est prévu à chaque extrémité de la conduite.

L'embout comporte une voûte interne et un capot de retenue qui coopère avec une région conique prévue à l'extrémité libre de la structure composite. Un organe d'étanchéité est interposé entre l'extrémité de la structure composite et la voûte.

Une telle conduite ne donne pas entière satisfaction. L'organe d'étanchéité étant rapporté entre la voûte et la structure composite, le risque de fuite n'est pas exclu si le montage de l'extrémité n'est pas réalisé correctement, ou après une utilisation prolongée dans laquelle l'embout est soumis à de nombreuses sollicitations mécaniques.

Ceci peut mener à des fuites de fluide dommageables pour l'environnement et pouvant affecter la sécurité de l'exploitation.

US2016/0290539 décrit un embout de conduite flexible, la conduite flexible comprenant des armures de pression qui peuvent être en composite.

Un but de l'invention est donc d'obtenir un embout pour une conduite flexible de transport de fluide très adaptée aux grandes profondeurs, qui offre un raccordement très étanche à un ensemble de surface ou à une autre conduite flexible, tout en étant simple à monter.

A cet effet, l'invention a pour objet un embout selon la revendication 1.

L'embout selon l'invention peut comprendre l'une ou plusieurs des caractéristiques des revendications 2 à 10 ou l'une des caractéristiques suivantes, prise(s) isolément ou suivant toute combinaison techniquement possible :
- la surface avant présente, en coupe dans au moins un plan axial passant par l'axe central une région inclinée d'un angle supérieur à 10° par rapport à l'axe central, notamment compris entre 15° et 40°;
- l'organe d'étanchéité présente une épaisseur maximale supérieure à 2 mm, et notamment comprise entre 3 mm et 10 mm ;
- la surface avant joint une surface extérieure de la conduite à la surface périphérique extérieure, éventuellement par l'intermédiaire d'une région d'extrémité cylindrique.

L'invention a également pour objet une conduite flexible selon la revendication 11.

La conduite flexible selon l'invention peut comprendre l'une ou plusieurs des caractéristiques suivantes, prise(s) isolément ou suivant toute combinaison techniquement possible :
- elle comporte une gaine tubulaire définissant le passage interne, la structure composite de renfort tubulaire étant appliquée sur la gaine tubulaire à l'extérieur de la gaine tubulaire en étant liée à la gaine tubulaire ;
- elle comprend au moins une nappe d'armures disposée autour de la structure composite de renfort, la ou chaque nappe d'armures étant non liée à la structure composite de renfort.

L'invention a également pour objet un procédé de fabrication d'un embout selon la revendication 12.

Le procédé selon l'invention peut comprendre l'une ou plusieurs des caractéristiques des revendications 13 à 15, prise(s) isolément ou suivant toute combinaison techniquement possible..

L'invention sera mieux comprise à la lecture de la description qui va suivre, donnée uniquement à titre d'exemple, et faite en se référant aux dessins annexés, sur lesquels :
- la figure 1 est une vue en perspective partiellement écorchée d'une première conduite flexible selon l'invention ;
- la figure 2 est une vue, prise en coupe suivant un plan axial médian, d'un embout de la conduite de la figure 1 ;
- la figure 3 est une vue d'un détail du montage d'une région d'extrémité de la structure composite de la conduite de la figure 1 dans l'embout de la figure 2 ;
- la figure 4 est une vue d'un détail illustrant l'organe d'étanchéité formé à l'extrémité de la structure composite ;
- les figures 5 et 6 illustrent des détails d'un poste de fabrication de la structure composite et/ou de l'organe d'étanchéité formé à l'extrémité de la structure composite ;
- la figure 7 est une vue analogue à la figure 1 d'une deuxième conduite flexible selon l'invention ;
- la figure 8 est une vue analogue à la figure 2 de l'embout de la conduite de la figure 7 ;
- la figure 9 est une vue d'un détail d'une portée de la voûte d'extrémité de l'embout de la figure 8 ;
- la figure 10 est une vue d'un détail marqué X-X de l'embout de la figure 8.

Dans tout ce qui suit, les termes « extérieur » et « intérieur » s'entendent respectivement comme plus éloigné radialement de l'axe de la conduite flexible et comme plus proche radialement de l'axe de la conduite flexible.

Les termes « avant » et « arrière » s'entendent de manière axiale par rapport à un axe A-A' de la conduite, le terme « avant » s'entendant comme relativement plus éloigné du milieu de la conduite et plus proche d'une de ses extrémités, le terme « arrière » s'entendant comme relativement plus proche du milieu de la conduite et plus éloigné d'une de ses extrémités. Le milieu de la conduite est le point de la conduite situé à égale distance des deux extrémités de cette dernière.

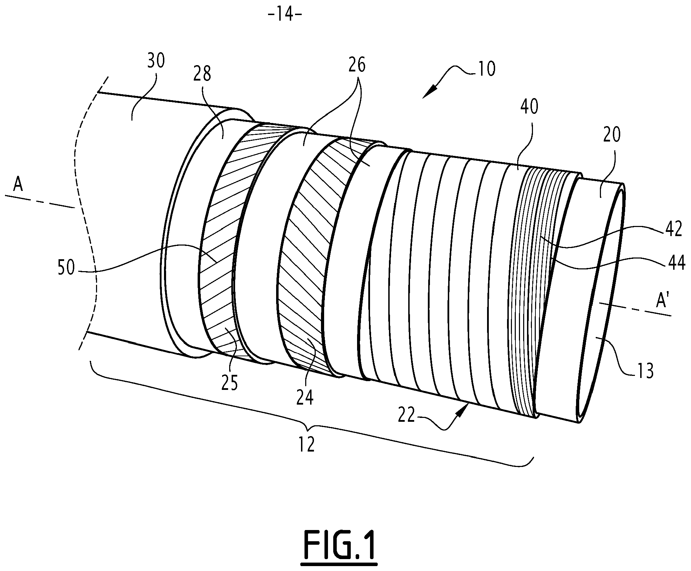

Une première conduite flexible 10 selon l'invention est illustrée schématiquement par les figures 1 à 4.

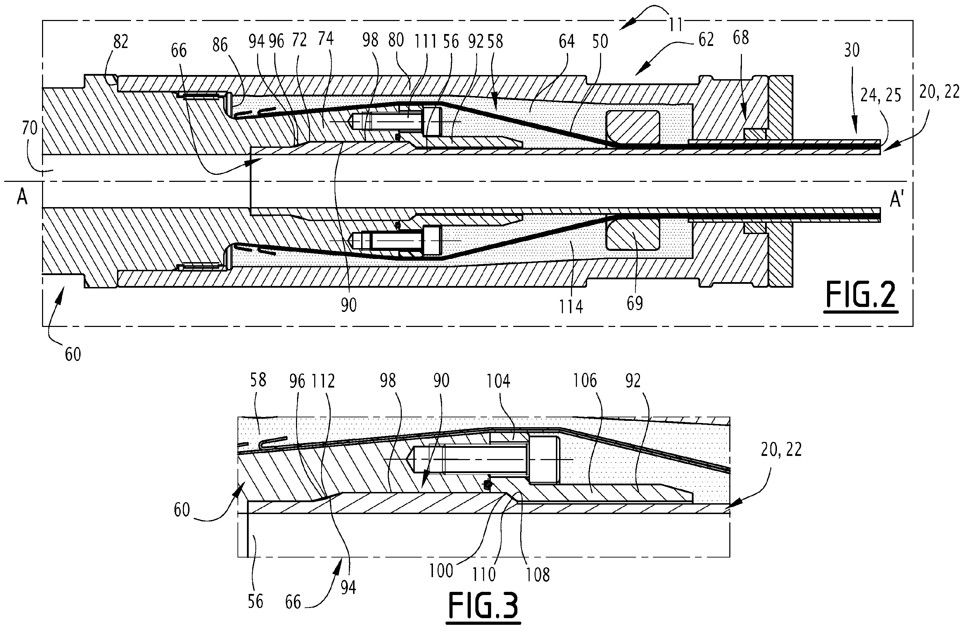

La conduite flexible 10 comporte un tronçon central 12 illustré en partie sur la figure 1. Elle comporte, à chacune des extrémités axiales du tronçon central 12, un embout d'extrémité 11, visible notamment sur la figure 2.

En référence à la figure 1, la conduite 10 délimite un passage interne 13 de circulation d'un fluide, avantageusement d'un fluide pétrolier. Le passage interne 13 s'étend suivant un axe A-A', entre l'extrémité amont et l'extrémité aval de la conduite 10. Il débouche à travers les embouts 11.

La conduite flexible 10 est destinée à être disposée à travers une étendue d'eau 14 dans une installation d'exploitation de fluide, notamment d'hydrocarbures.

L'étendue d'eau 14 est par exemple, une mer, un lac ou un océan. La profondeur de l'étendue d'eau 14 au droit de l'installation d'exploitation de fluide est par exemple comprise entre 500 m et 4000 m.

L'installation comporte un ensemble de surface et un ensemble de fond (non représentés) ou deux ensembles de surface qui sont avantageusement raccordés entre eux par la conduite flexible 10.

L'ensemble de surface est par exemple flottant. Il est avantageusement formé par une unité flottante de production, de stockage et de déchargement appelée FPSO (« Floating Production, Storage and Offloading » en langue anglaise), une unité flottante dédiée au gaz naturel liquéfié appelée FLNG (« Floating Liquified Natural Gas » en langue anglaise), une plate-forme semi-submersible ou une bouée de déchargement. En variante, l'ensemble de surface est une structure rigide fixe de type « jacket » ou une structure oscillante assujettie au fond de la mer pouvant être par exemple un TLP (« Tension Leg Platform » en langue anglaise).

Dans cet exemple, la conduite flexible 10 raccorde l'ensemble de fond à l'ensemble de surface. La conduite flexible 10 est donc partiellement immergée dans l'étendue d'eau 14 et présente une extrémité supérieure disposée dans un volume d'air.

En variante, la conduite flexible 10 est totalement immergée dans l'étendue d'eau 14 et raccorde par exemple deux ensembles de fond (non représentés) entre eux.

Une autre variante consiste en une conduite flexible 10 partiellement immergée dans l'étendue d'eau 14 et raccordant par exemple deux ensembles de surface (typiquement une bouée de déchargement et un FPSO). Ceci est notamment le cas des lignes flexibles de type OOL (« Oil Offloading Line » en langue anglaise).

Comme illustré par la figure 1, la conduite 10 délimite une pluralité de couches concentriques autour de l'axe A-A', qui s'étendent continûment le long du tronçon central 12 jusqu'aux embouts 11 situés aux extrémités de la conduite.

Dans l'exemple de la figure 1, la conduite 10 comporte au moins une gaine interne tubulaire 20 à base de matériau polymère constituant avantageusement une gaine de pression, et une structure composite de renfort 22 tubulaire, appliquée autour de la gaine tubulaire 20 en étant liée à celle-ci. En variante, la conduite 10 est dépourvue de gaine interne tubulaire 20, la structure composite de renfort 22 étant alors étanche.

La conduite 10 comporte en outre dans cet exemple une pluralité de nappes d'armures de traction 24, 25 disposées extérieurement par rapport à la structure composite de renfort 22 en étant non liées à la structure composite de renfort 22.

Avantageusement, et selon l'utilisation souhaitée, la conduite 10 comporte en outre des couches anti-usure 26, interposées entre la structure composite de renfort 22 et les nappes d'armures de traction 24, 25, ainsi qu'au sein des nappes d'armures de traction 24, 25. Elle comporte en outre avantageusement un ruban de renfort 28, enroulé autour des nappes d'armures de traction 24, 25 et une gaine externe 30, destinée à la protection de la conduite 10.

De manière connue, la gaine tubulaire 20 est destinée à confiner de manière étanche le fluide transporté dans le passage 13. La gaine tubulaire 20 a aussi pour fonction de protéger la structure composite de renfort 22 contre l'abrasion liée à la présence de particules abrasives, par exemple du sable, au sein du fluide transporté dans le passage 13. La gaine tubulaire 20 est formée en matériau polymère, de préférence thermoplastique. Par exemple, le polymère formant la gaine tubulaire 20 est à base d'une polyoléfine telle que du polyéthylène, à base d'un polyamide tel que du PA11 ou du PA12, ou à base d'un polymère fluoré tel que du polyfluorure de vinylidène (PVDF).

En variante, la gaine tubulaire 20 est formée à base d'un polymère haute performance tel que le PEK (polyéthercétone), le PEEK (polyétheréthercétone), le PEEKK (polyétheréthercétonecétone), le PEKK (polyéthercétonecétone), le PEKEKK (polyéthercétoneéthercétonecétone), le PAI (polyamide-imide), le PEI (polyéther-imide), le PSU (polysulfone), le PPSU (polyphénylsulfone), le PES (polyéthersulfone), le PAS (polyarylsulfone), le PPE (polyphénylèneéther), le PPS (polysulfure de phénylène) les LCP (polymères à cristaux liquides), le PPA (polyphtalamide) et/ou leurs mélanges ou encore en mélange avec le PTFE (polytétrafluoroéthylène) ou le PFPE (perfluoropolyéther).

L'épaisseur de la gaine tubulaire 20 est par exemple comprise entre 1 mm et 20 mm.

La gaine tubulaire 20 est formée d'un tube en matériau polymère, d'une bande en matériau polymère assemblé, ou d'un mat de polymère imprégné.

Lorsque la gaine tubulaire 20 est formée d'un tube, elle est avantageusement obtenue par extrusion d'un tube thermoplastique choisi notamment parmi les polymères mentionnés ci-dessus.

Lorsque la gaine tubulaire 20 est formée d'une bande en matériau polymère assemblé, elle est réalisée avantageusement par extrusion et enroulement de bandes thermoplastiques d'un polymère tel que décrit plus haut. De préférence, les spires d'une première couche sont jointives (bord à bord sans recouvrement) et les spires d'une couche supérieure sont disposées de façon à avoir un recouvrement de deux bandes adjacentes inférieures assurant l'étanchéité de la gaine tubulaire 20.

La conduite flexible 10 est dépourvue de carcasse interne, elle est désignée par le terme anglais « smooth bore ». La surface interne de la gaine tubulaire 20 délimite directement le passage interne 13.

Dans cet exemple, la structure composite de renfort 22 est appliquée directement sur la gaine tubulaire 20. Elle est assemblée sur la gaine tubulaire 20 pour former un ensemble lié avec la gaine tubulaire 20.

La structure composite de renfort 22 comporte au moins une, de préférence une pluralité de couches composites de renfort laminées, et éventuellement, une couche anti-délamination interposée entre au moins deux couches de renfort.

Chaque couche de renfort laminée comporte une superposition de couches composites de renfort.

En référence à la figure 1, chaque couche composite de renfort comporte une matrice en polymère 40 et des fibres de renfort 42 noyées dans la matrice 40.

De préférence, la matrice 40 est formée d'un polymère, notamment d'un polymère thermoplastique. Le polymère de la gaine tubulaire 20 est avantageusement de même nature que celui de la matrice 40. Par « de même nature », on entend au sens de la présente invention que le polymère de la gaine tubulaire 20 et le polymère de la matrice 40 sont propres à fondre et à former un mélange intime, sans séparation de phase, après refroidissement.

Par exemple, le polymère formant la matrice 40 est à base d'une polyoléfine telle que du polyéthylène, à base d'un polyamide tel que du PA11 ou du PA12, ou à base d'un polymère fluoré tel que du polyfluorure de vinylidène (PVDF)
En variante, la matrice 40 est formée à base d'un polymère haute performance tel que le PEK (polyéthercétone), le PEEK (polyétheréthercétone), le PEEKK (polyétheréthercétonecétone), le PEKK (polyéthercétonecétone), le PEKEKK (polyéthercétoneéthercétonecétone), le PAI (polyamide-imide), le PEI (polyéther-imide), le PSU (polysulfone), le PPSU (polyphénylsulfone), le PES (polyéthersulfone), le PAS (polyarylsulfone), le PPE (polyphénylèneéther), le PPS (polysulfure de phénylène) les LCP (polymères à cristaux liquides), le PPA (polyphtalamide) et/ou leurs mélanges ou encore en mélange avec le PTFE (polytétrafluoroéthylène) ou le PFPE (perfluoropolyéther).

Les fibres de renfort 42 sont par exemple des fibres de carbone, des fibres de verre, des fibres d'aramide, ou/et des fibres de basalte.

Les fibres de renfort 42 présentent généralement une résistance à la traction maximale supérieure à 2 GPa, avantageusement supérieure à 3 GPa et comprise par exemple entre 3 GPa et 6 GPa, telle que mesurée à 23° C selon la Norme ASTM D885M - 10A(2014)e1.

Dans la présente demande, les termes « résistance à la traction maximale » et « résistance à la traction » ont la même signification et désignent la limite à la rupture en traction (« ultimate tensile strength » en langue anglaise) mesurée lors d'un essai de traction.

En outre, les fibres de renfort 42 présentent avantageusement un module de traction supérieur à 50 GPa , compris par exemple entre 70 GPa et 500 GPa , notamment entre 50 GPa et 100 GPa pour les fibres de verre, entre 100 GPa et 500 GPa pour les fibres de carbone et entre 50 GPa et 200 GPa pour les fibres d'aramide, tel que mesuré à 23°C selon la Norme ASTM D885M - 10A(2014)e1.

Dans la présente demande, les termes « module de traction », « module d'Young » et « module d'élasticité en traction » ont la même signification et désignent le module d'élasticité mesuré lors d'un essai de traction.

La densité des fibres de renfort 42 est généralement comprise entre 1,4 g/cm³ et 3,0 g/cm³.

Les fibres de renfort 42 sont par exemple agencées de manière unidirectionnelle dans la matrice 40. Elles sont alors parallèles les unes aux autres. En variante, les fibres de renfort 42 sont croisées suivant deux directions orthogonales, ou encore sont disposées de manière aléatoire dans la matrice (non représenté).

La longueur des fibres de renfort 42 dans chaque couche composite est supérieure à 300 m, et est notamment comprise entre 300 m et 4500 m.

Le diamètre des fibres composites est par exemple inférieur à 100 microns, et est notamment compris entre 4 microns et 10 microns.

De préférence, chaque couche composite de renfort est formée d'un enroulement d'au moins une bande composite 44 présentant plusieurs couches de fibres 42 noyées dans une matrice 40 allongée, de longueur supérieure à au moins 10 fois sa largeur et à au moins 10 fois son épaisseur.

Par exemple, la longueur de chaque bande composite 44 est supérieure à 100 m et est comprise entre 100 m et 4500 m. La largeur de chaque bande composite 44 est comprise entre 6 mm et 50 mm. L'épaisseur de chaque bande composite 44 est comprise entre 0,1 mm et 1 mm.

Chaque bande composite 44 présente ainsi à 23°C, un module de traction supérieur à 10 MPa , notamment compris entre 30 GPa et 170 GPa, tel que mesuré par la Norme NF EN 2561, Janvier 1996, une élongation à la rupture supérieure à 1 %, notamment comprise entre 1 % et 5%, telle que mesurée par la Norme NF EN 2561, Janvier 1996, et une résistance à la traction maximale supérieure à 100 MPa , et notamment comprise entre 350 MPa et 3500 MPa telle que mesurée par la Norme NF EN 2561, Janvier 1996.

Lors de la réalisation de chaque couche de renfort, la ou chaque bande composite 44 est enroulée en hélice autour de l'axe A-A' de la gaine tubulaire 20, et est chauffée pour provoquer la fusion partielle de la matrice 40, et la liaison avec les spires successives de la bande composite 44, et/ou avec les couches adjacentes qui peuvent être d'autres couches de renfort, des couches anti-délamination ou la gaine tubulaire 20.

La valeur absolue de l'angle d'hélice d'enroulement β de chaque bande composite 44 par rapport à l'axe A-A' de la conduite 10 est par exemple comprise entre 60° et 90°. Ceci assure une élongation du composite sous l'effet de la pression interne, et une coopération adéquate avec les nappes d'armures 24, 25.

L'épaisseur de chaque couche composite est généralement comprise entre 0,10 mm et 0,30 mm, par exemple entre 0,12 mm et 0,17 mm, ou entre 0,22 mm et 0,27 mm.

Dans l'exemple représenté sur la figure 1, la conduite flexible 10 comporte une nappe d'armures interne 24, et une nappe d'armures externe 25 autour de laquelle est disposée la gaine extérieure 30.

Chaque nappe d'armures 24, 25 comporte des éléments d'armure 50 longitudinaux enroulés à pas long autour de l'axe A-A' de la conduite.

Par « enroulé à pas long », on entend que la valeur absolue par rapport à l'axe A-A' de l'angle d'hélice est inférieure à 50°, et est typiquement comprise entre 25° et 45°.

Les éléments d'armure 50 d'une première nappe 24 sont enroulés généralement suivant un angle opposé par rapport aux éléments d'armure 50 d'une deuxième nappe 25. Ainsi, si l'angle d'enroulement par rapport à l'axe A-A' des éléments d'armure 50 de la première nappe 24 est égal à + α, α étant compris entre 25° et 45°, l'angle d'enroulement par rapport à l'axe A-A' des éléments d'armure 50 de la deuxième nappe 25 disposée au contact de la première nappe 24 est par exemple de - α, avec α compris entre 25° et 45°.

Les éléments d'armure 50 sont par exemple formés par des fils métalliques. En variante, les éléments d'armure 50 sont formés par des fils ou rubans plats en composite renforcés avec des fibres de carbone.

La combinaison d'un angle β d'enroulement des bandes composites 44 de valeur absolue comprise entre 55° et 85°, de préférence entre 60 et 80°, avec un angle α d'enroulement des éléments d'armure 50 de valeur absolue comprise entre 25° et 45°, empêche l'élongation de la structure composite de renfort 22 par effet de compensation produit par les nappes d'armures 24, 25.

La structure composite de renfort 22 pouvant présenter une résistance à la traction faible et ayant tendance à s'allonger sous l'effet d'efforts axiaux, les nappes d'armures 24, 25 reprennent les efforts axiaux et préviennent ainsi l'allongement de la structure composite de renfort 22.

La combinaison optimale entre les angles α, β d'enroulement réduit drastiquement les contraintes dans l'ensemble tubulaire formé par la gaine interne 20 et la structure composite de renfort 22, et donc l'épaisseur nécessaire pour résister aux efforts de flexion, de pression interne ou/et d'écrasement (« collapse »).

En outre, grâce à la raideur axiale de la structure composite de renfort 22, les nappes d'armures de traction 24, 25 résistent mieux à la compression axiale sous les conditions de pression externe du grand fond.

En outre, l'angle α d'enroulement des éléments d'armure 50 de valeur absolue comprise entre 25° et 45°, pris en combinaison avec l'angle β d'enroulement des bandes composites 44 de valeur absolue comprise entre 60° et 80 ° autorise une compression de la structure composite de renfort 22, réduisant le rayon de courbure minimal (« minimal bending radius » ou « MBR » en anglais).

La déformation admissible en traction à l'extrados de l'ensemble tubulaire formé par la gaine interne 20 et la structure composite de renfort 22 est supérieure à 1%. Cette déformation induit le rayon d'enroulement compatible avec la plupart des équipements de fabrication et de pose.

La gaine externe 30 est destinée à empêcher la perméation de fluide depuis l'extérieur de la conduite flexible 10 vers l'intérieur. Elle est avantageusement réalisée en matériau polymère, notamment à base d'une polyoléfine, telle que du polyéthylène, à base d'un polyamide, tel que du PA11 ou du PA12, ou à base d'un polymère fluoré tel que du polyfluorure de vinylidène (PVDF).

L'épaisseur de la gaine externe 30 est par exemple comprise entre 5 mm et 15 mm.

Chaque couche anti-usure 26 est formée par exemple de PA (polyamide), PE (polyéthylène), PVDF (polyfluorure de vinylidène), PEEK (polyétheréthercétone), PEKK (polyéthercétonecétone). Une couche anti-usure 26 est disposée entre la structure composite de renfort 22 et la première nappe d'armures de traction 24. Une autre couche anti-usure 26 est placée entre chaque paire de nappe d'armures 24, 25, avantageusement comme indiqué dans la Norme API 17J, 4e édition Mai 2014.

Le ruban de renfort 28 est formé par exemple d'une couche anti-flambement de résistance élevée. Cette couche est par exemple en aramide. Le ruban est enroulé autour de la nappe d'armures 25 située la plus à l'extérieur, entre la nappe d'armures 25 et la gaine externe 30, avantageusement comme indiqué dans la Norme API 17J, 4e édition Mai 2014.

Comme illustré par la figure 2, chaque embout 11 inclut ici une région d'extrémité 56 de la structure composite de renfort 22, et des tronçons d'extrémité 58 des éléments d'armure 50.

L'embout 11 comporte en outre une voûte d'extrémité 60 recevant la région d'extrémité 56 et un capot extérieur de liaison 62 faisant saillie axialement vers l'arrière à partir de la voûte d'extrémité 60. Le capot 62 délimite, avec la voûte d'extrémité 60, une chambre 64 de réception des tronçons d'extrémité 58 des éléments d'armure 50.

L'embout 11 comporte en outre un ensemble avant 66 d'étanchéité autour de la structure composite de renfort 22, représenté schématiquement sur la figure 2, et un ensemble arrière 68 d'étanchéité autour de la gaine extérieure 30.

L'embout 11 comprend avantageusement un organe annulaire 69 de maintien des nappes d'armures 24, 25 situé dans la zone arrière de l'embout 11.

Dans cet exemple, la voûte d'extrémité 60 est destinée à raccorder la conduite 10 à un autre embout de connexion 11 ou à des équipements terminaux, avantageusement par l'intermédiaire d'une bride d'extrémité (non représentée).

La voûte d'extrémité 60 présente un alésage central 70 d'axe A-A' destiné à permettre l'écoulement du fluide circulant à travers le passage interne 13 vers l'extérieur de la conduite 10 et un logement annulaire 72 situé autour de l'alésage 70 pour recevoir la région d'extrémité 56 de la structure composite de renfort 22 et de la gaine 20.

Avantageusement, la voûte d'extrémité 60 est métallique.

Le logement annulaire 72 est délimité extérieurement par une jupe arrière 74 de la voûte d'extrémité 60.

Le capot 62 comporte une paroi périphérique 80 tubulaire s'étendant autour de l'axe A-A'. La paroi périphérique 80 présente un bord avant 82 fixé sur la voûte d'extrémité 60, à l'écart radialement des nappes d'armures 24, 25 et un bord arrière s'étendant axialement vers l'arrière au-delà de la voûte d'extrémité 60.

Le capot 62 délimite la chambre 64 radialement vers l'extérieur. Une face arrière 86 de la voûte d'extrémité 60 située à l'extérieur de la jupe 74 délimite axialement la chambre 64 vers l'avant.

Le volume de la chambre 64 varie selon la taille de l'embout 11. Par exemple, pour une conduite de 6", soit environ 15,2 cm, le volume de la chambre 64 sera environ de 30L, et pour une conduite de 16", soit environ 40,6 cm, le volume de la chambre 64 sera environ de 60L.

L'ensemble avant d'étanchéité 66 est avantageusement situé à l'avant de l'embout 11, en contact avec la voûte d'extrémité 60, en étant décalé axialement vers l'avant par rapport à l'organe annulaire 69 de maintien, et par rapport à l'ensemble arrière d'étanchéité 68.

L'ensemble avant d'étanchéité 66 comporte un organe d'étanchéité 90, solidaire de la région d'extrémité 56 de la structure composite de renfort 22, un organe de maintien 92, propre à maintenir la région d'extrémité 56 fixée contre la voûte d'extrémité 60 par l'intermédiaire de l'organe d'étanchéité 90, et une portée 94 de la voûte d'extrémité 60, propre à coopérer avec l'organe d'étanchéité 90 pour réaliser l'étanchéité autour de la structure composite de renfort 22.

L'organe d'étanchéité 90 fait saillie radialement autour de la région d'extrémité 56. Il est ici rapporté sur la surface périphérique extérieure de la région d'extrémité 56. Il possède une forme annulaire s'étendant angulairement de 360° autour de l'axe A-A'.

L'organe d'étanchéité 90 présente une surface avant 96 non perpendiculaire à l'axe A-A '. Il présente une surface périphérique extérieure 98 cylindrique et une surface arrière 100 avantageusement conique.

Par « non perpendiculaire à l'axe A-A'», on entend plus généralement une surface qui en coupe dans un plan médian passant par l'axe A-A', comporte d'un côté de l'axe A-A' au moins un point avant décalé axialement le long de l'axe A-A' par rapport à un point arrière.

Avantageusement, l'organe d'étanchéité 90 présente une surface avant 96 de géométrie axisymétrique selon l'axe A-A'. Plus avantageusement, l'organe d'étanchéité 90 présente une surface avant 96 conique.

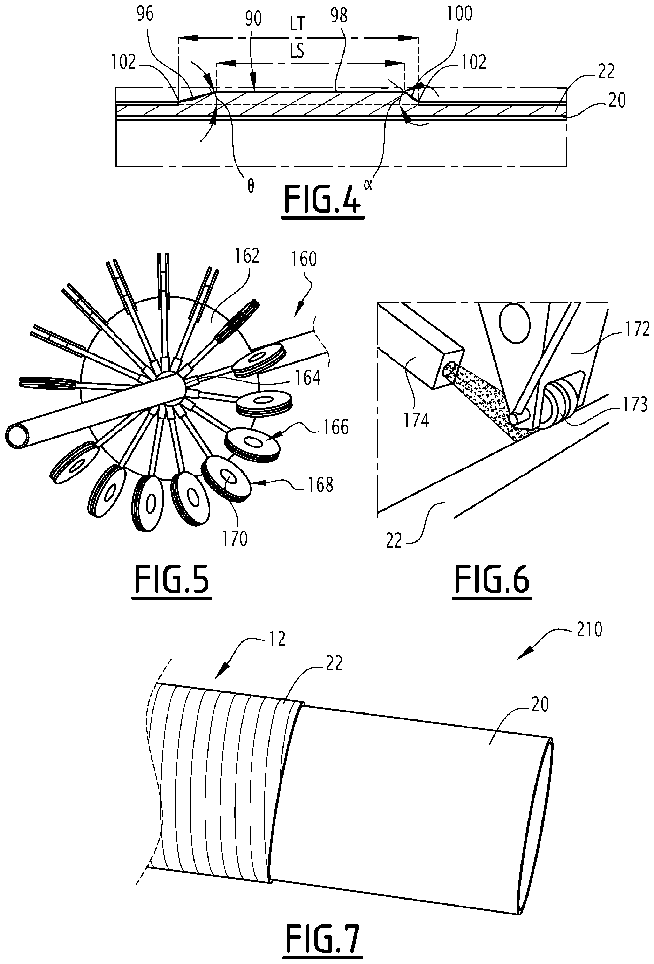

En référence à la figure 4, de préférence, la surface avant 96 diverge à l'écart de l'axe A-A' en se déplaçant d'avant en arrière. Ceci signifie que le point avant est situé plus proche de l'axe A-A' et le point arrière est situé plus éloigné de l'axe A-A'.

En outre, avantageusement, le demi angle au sommet θ du cône engendrant la surface avant 96 est supérieur à 10 ° et est généralement compris entre 15° et 40°.

De la sorte, l'organe d'étanchéité 90 coopère avantageusement avec la portée 94 complémentaire de la voûte d'extrémité 60 pour former un ensemble d'étanchéité dont l'efficacité augmente avec la pression régnant dans le passage interne 13 de la conduite flexible 10.

En effet, une augmentation de la pression interne dans la conduite flexible 10 entraine une augmentation des diamètres de la structure composite de renfort 22 et de l'organe d'étanchéité 90. Cette augmentation de diamètre plaque plus fortement l'organe d'étanchéité 90 contre la voûte d'extrémité 60 via la surface avant 96 et donc augmente la pression de contact entre ces deux pièces. Cette augmentation de pression de contact améliore l'étanchéité entre ces pièces. L'ensemble d'étanchéité ainsi produit est auto-énergisant et son efficacité est d'autant plus grande que la pression est forte.

En outre, cet effet d'auto-énergisation de l'organe d'étanchéité 90 est d'autant plus grand que le demi-angle au sommet θ est faible. Par ailleurs, on peut noter que cet effet ne se produit pas lorsque la surface avant est perpendiculaire à l'axe A-A', ce qui correspondrait au cas où le demi-angle θ au sommet est égal à 90°.

Avantageusement, selon la présente invention, le demi-angle au sommet θ n'est pas nul, c'est-à-dire que la surface avant 96 n'est pas un cylindre d'axe A-A'. En effet, ceci simplifie le procédé de montage de l'embout 11 en évitant d'avoir à utiliser des moyens de sertissage radial difficiles à mettre en œuvre.

Pour garantir une étanchéité suffisante lorsque la pression et la température du fluide sont élevées, il est nécessaire que, d'une part, la surface avant 96 de l'organe d'étanchéité 90 et, d'autre part, la portée 94 complémentaire de la voûte d'extrémité 60 avec laquelle elle coopère soient fortement plaquées l'une contre l'autre, pour que la pression de contact entre ces deux pièces soit suffisamment élevée pour assurer la fonction d'étanchéité requise. Pour atteindre un niveau de pression de contact élevé requis, il est nécessaire de déformer l'une des deux pièces, en l'espèce, l'organe d'étanchéité 90 qui est constitué d'un matériau plus déformable que la voûte d'extrémité 60.

A 23°C, la voûte d'extrémité 60 présente un module d'élasticité en traction et une dureté supérieurs respectivement au module d'élasticité en traction et à la dureté de l'organe d'étanchéité 90. Ainsi, lors d'un sertissage de l'organe d'étanchéité 90, ce dernier se déforme et épouse la forme de la voûte d'extrémité 60 qui se déforme moins que l'organe d'étanchéité 90.

Dans le cas où le demi-angle au sommet θ est nul, une pièce annulaire, avantageusement métallique, entourant l'organe d'étanchéité, doit être déformée radialement, ce qui est difficile à mettre en œuvre.

Selon la présente invention, lorsque la surface avant 96 est un cône de demi-angle au sommet θ supérieur à 0°, avantageusement supérieur à 10°, l'effet de coin associé à ce cône facilite le montage de l'embout 11, en permettant l'utilisation de moyens de serrage axial pour générer la pression de contact requise au niveau de la surface avant 96. De plus, cette configuration géométrique permet d'appliquer une pression de contact élevée entre d'une part la surface avant 96 de l'organe d'étanchéité 90 et d'autre part la portée 94 complémentaire de la voûte d'extrémité 60 sans provoquer l'effondrement de la structure de renfort 22. En effet, cette pression de contact étant orientée perpendiculairement à la surface avant 96 de l'organe d'étanchéité 90 au niveau de chaque point de contact avec la voûte d'extrémité 60, il s'en suit que cette pression de contact n'est pas orientée perpendiculairement à l'axe A-A' de la structure composite de renfort 22. Ainsi, selon l'invention, cette pression de contact n'est pas orientée radialement car elle a aussi une composante axiale non nulle en plus de sa composante radiale, ce qui permet de réduire les contraintes radiales appliquées à la structure composite de renfort 22.

Il est entendu que le demi-angle au sommet θ est le demi-angle au sommet avant montage de l'embout 11.

L'organe d'étanchéité 90 comporte également dans cet exemple, respectivement à l'avant et à l'arrière de la surface avant 96 et de la surface arrière 100, une région d'extrémité 102 cylindrique, d'épaisseur inférieure à 25 % de l'épaisseur maximale de l'organe d'étanchéité 90, prise perpendiculairement à l'axe A-A'.

L'épaisseur maximale de l'organe d'étanchéité 90, prise perpendiculairement à l'axe A-A', est supérieure à 2 mm et est généralement comprise entre 3 mm et 10 mm. De préférence, l'épaisseur maximale de l'organe d'étanchéité 90 est inférieure à l'épaisseur maximale combinée de la gaine 20 et de la structure composite de renfort 22, prise perpendiculairement à l'axe A-A' au niveau de la région d'extrémité 56.

La surface périphérique extérieure 98 présente une longueur LS généralement supérieure ou égale à 30 mm, prise parallèlement à l'axe A-A'. Cette longueur LS est par exemple comprise entre 75 mm et 300 mm et préférentiellement comprise entre 75 mm et 100 mm. La longueur LS est suffisante pour assurer une bonne transmission des efforts axiaux entre, d'une part, la couche de renfort 40 et, d'autre part, l'organe d'étanchéité 90.

La surface arrière conique 100 converge vers l'axe A-A' en se déplaçant de l'avant vers l'arrière. Le demi-angle α au sommet du cône engendrant la surface arrière 100 est supérieur à 15 ° et est généralement compris entre 30° et 40°.

Le demi-angle α au sommet du cône engendrant la surface arrière 100 est de préférence supérieur au demi-angle θ au sommet du cône engendrant la surface avant 96.

De préférence, l'organe d'étanchéité 90 est formé d'un polymère, notamment d'un polymère thermoplastique. Le polymère de l'organe d'étanchéité 90 est avantageusement de même nature que celui de la matrice 40. Par « de même nature », on entend au sens de la présente invention que le polymère de l'organe d'étanchéité 90 et le polymère de la matrice 40 sont propres à fondre et à former un mélange intime, sans séparation de phase, après refroidissement.

L'organe d'étanchéité 90 présente au moins une région extérieure formée du polymère, et dépourvue de fibres de renfort. En particulier, la région extérieure de l'organe d'étanchéité 90 située sous la surface avant 96 est dépourvu de fibres de renfort, ce qui améliore la souplesse et la déformabilité de cette région et lui permet de jouer le rôle d'un joint d'étanchéité. En outre, l'épaisseur de la région extérieure de l'organe d'étanchéité 90 formée du polymère, dépourvue de fibres de renforts et située sous la surface avant 96, est avantageusement supérieure ou égale à 0,5 mm, plus avantageusement supérieure ou égale à 1 mm, et préférentiellement comprise entre 2 mm et 10 mm. Ainsi, l'organe d'étanchéité 90 est propre à se déformer localement pour s'appliquer intimement sur la portée 94, sur au moins une circonférence autour de l'axe A-A'.

De préférence, l'organe d'étanchéité 90 est constitué de polymère, en étant totalement dépourvu de fibres de renfort. Ainsi la fabrication de l'organe d'étanchéité 90 est simplifiée puisque celui-ci est entièrement réalisé en polymère et qu'il ne comporte dans ce cas aucune partie en matériau composite. En outre, ce mode de réalisation permet d'obtenir une bonne étanchéité car l'organe d'étanchéité 90 est propre à se déformer localement pour s'appliquer intimement sur la portée 94, sur au moins une circonférence autour de l'axe A-A'. Avantageusement, selon cet exemple, le polymère thermoplastique est semi-cristallin présentant une température de transition vitreuse Tg supérieure à 80°C, préférentiellement supérieure à 130°C. De plus, avantageusement, le module d'Young de ce polymère semi-cristallin mesuré à 23°C selon la Norme ASTM D638 est supérieur à 3 GPa, préférentiellement supérieur à 4 GPa.

De plus, avantageusement, la région extérieure de l'organe d'étanchéité 90 qui est formée du polymère, qui est dépourvue de fibres de renforts et qui est située sous la surface avant 96, est constituée d'un polymère thermoplastique semi-cristallin présentant une température de transition vitreuse Tg supérieure à 80°C, préférentiellement supérieure à 130°C. De plus, avantageusement, le module d'Young de ce polymère semi-cristallin mesuré à 23°C selon la Norme ASTM D638 est supérieur à 3 GPa, préférentiellement supérieur à 4 GPa. Cette rigidité élevée permet d'atteindre une pression de contact élevée entre la surface avant 96 et la portée 94 tout en évitant de déformer excessivement l'organe d'étanchéité 90 et en se limitant à des déformations essentiellement élastiques, les déformations plastiques étant très faibles. En outre, le fait que le polymère soit semi-cristallin et qu'il présente une température de transition vitreuse Tg sensiblement supérieure à la température de service de la conduite flexible a pour effet que le module d'Young et l'élasticité du polymère restent élevés lorsque la conduite est en service. Par suite, la pression de contact reste elle aussi élevée, ce qui assure la qualité de l'étanchéité.

Ainsi, selon un premier exemple, la région extérieure de l'organe d'étanchéité 90 qui est située sous la surface avant 96 et qui est dépourvue de fibres de renforts est avantageusement formée de PEEK (polyétheréthercétone) et elle présente une épaisseur de l'ordre de 4 mm. Le PEEK présente à 23°C un module d'Young légèrement supérieur à 4 GPa et il peut supporter une compression de 2000 bar en se déformant très faiblement dans le domaine élastique, typiquement de l'ordre de 5% ce qui correspond dans cet exemple à une réduction d'épaisseur très faible de l'ordre de 0,2mm. Le PEEK est, de plus, un polymère semi-cristallin qui présente une température de transition vitreuse Tg légèrement supérieure à 140°C. Ainsi, le module d'Young du PEEK diminue très peu lorsque la température augmente depuis la température ambiante, typiquement 23°C, jusqu'à une température de l'ordre de 130°C. Le module d'Young à 130°C étant de l'ordre de 3,8 GPa. Par suite, la pression de contact entre la surface avant 96 et la portée 94 diminue très peu lorsque la température augmente depuis la température ambiante jusqu'à une température de l'ordre de 130°C, ce qui assure l'étanchéité de l'embout 11 fabriqué à température ambiante lorsque la conduite flexible 10 est utilisée pour transporter un fluide présentant une température maximale égale à 130°C. Dans cet exemple, le matériau composite utilisé pour former la structure composite de renfort 22 et les autres régions de l'organe d'étanchéité 90, comporte avantageusement une matrice de PEEK renforcée de fibres de carbone.

Selon un deuxième exemple avantageux de réalisation de l'invention, la structure composite de renfort 22 est formée d'un matériau composite comportant une matrice de PEEK renforcée de fibres de carbone, et l'organe d'étanchéité 90 est constitué de PEEK, en étant totalement dépourvu de fibres de renfort.

Selon un troisième exemple de réalisation de l'invention, la structure composite de renfort 22 est formée d'un matériau composite comportant une matrice de PPS (polysulfure de phénylène) renforcée de fibres de carbone, et l'organe d'étanchéité 90 est constitué de PPS, en étant totalement dépourvu de fibres de renfort. Le PPS est un thermoplastique semi-cristallin présentant une température de transition vitreuse Tg de l'ordre de 90°C, et un module d'Young à 23°C, de l'ordre de 4 GPa.

Alternativement, l'organe d'étanchéité 90 est entièrement formé d'un matériau composite comportant une matrice en polymère et des fibres de renfort noyées dans la matrice de même nature que la structure composite de renfort 22. En outre ledit matériau composite présente à 23°C un module de traction avantageusement inférieur ou égal 100 GPa, préférentiellement inférieur ou égal à 60 GPa, tel que mesuré selon la Norme NF EN 2561, Janvier 1996. Ce mode de réalisation de l'invention dans lequel la région extérieure de l'organe d'étanchéité 90 qui est située sous la surface avant 96 est constituée d'un matériau composite est avantageux dans le cas où ce matériau composite présente une souplesse et une déformabilité suffisantes pour jouer le rôle d'un joint d'étanchéité, par exemple lorsque ce matériau composite comporte une matrice en polyamide renforcée de fibres de verre et présente à 23°C un module de traction de l'ordre de 3 GPa.

Le rapport du module axial de la structure composite de renfort 22 au module axial de l'organe d'étanchéité 90 est inférieur à 35, notamment inférieur à 25, avantageusement inférieur à 5. Ce rapport est avantageusement supérieur ou égal à 1. Dès lors, le comportement élastique de l'organe d'étanchéité 90 dans la direction axiale est similaire au comportement élastique de la structure composite de renfort 22 dans la direction axiale. Ainsi, lorsque la conduite flexible 10 est en service, les efforts axiaux sont transmis de l'organe d'étanchéité 90 vers la structure de renfort 22 en limitant les concentrations de contraintes à l'interface de l'organe d'étanchéité 90 et la structure de renfort 22. Dans la présente demande, le module axial d'une structure tubulaire d'axe A-A' est égal au module d'élasticité mesuré en effectuant à 23°C un essai de traction sur cette structure tubulaire parallèlement à l'axe A-A' La structure composite de renfort 42 est anisotrope et possède des propriétés mécaniques différentes dans les directions axiale et radiale. Ainsi, lorsque les fibres de renfort 42 de la structure composite de renfort 22 sont orientées hélicoïdalement avec un angle d'hélice compris entre 55° et 85° par rapport à l'axe A-A', ces fibres contribuent principalement à augmenter la résistance de la structure composite de renfort 22 vis-à-vis des efforts orientés radialement, et elles contribuent peu à sa rigidité axiale. Dans ce cas, le module axial de la structure composite de renfort 22 est typiquement inférieur à 10 GPa, voire même inférieur à 5 GPa, c'est-à-dire qu'il se rapproche du module d'Young du polymère formant la matrice du matériau composite dont est constitué la structure composite de renfort 22. De plus, avantageusement, l'organe d'étanchéité 90 est formé avec le même polymère qui est utilisé seul ou bien renforcé avec des fibres enroulées hélicoïdalement selon une configuration similaire à celle de la structure composite de renfort 22. Le module de la structure composite de renfort 22 est ainsi, selon un mode de réalisation avantageux, proche du module de l'organe d'étanchéité 90.

Comme on le verra plus bas, l'organe d'étanchéité 90 est de préférence formé d'un enroulement d'au moins une épaisseur de bande polymère fondue. La bande polymère est de longueur supérieure à au moins 10 fois sa largeur et à au moins 10 fois son épaisseur.

Par exemple, la longueur de chaque bande polymère est supérieure à 100 m et est comprise entre 100 m et 4500 m. La largeur de chaque bande polymère est comprise entre 6 mm et 50 mm. L'épaisseur de chaque bande polymère est comprise entre 0,1 mm et 1 mm.

L'organe de maintien 92 est par exemple formé d'un collier fixé sur la voûte d'extrémité 60.

L'organe de maintien comporte ainsi un rebord avant 104 appliqué sur un bord arrière de la jupe 74 de la voûte d'extrémité 60, une paroi périphérique 106 engagée autour de la structure composite de renfort 22 et un épaulement arrière 108 faisant saillie radialement vers l'axe A-A' pour définir une butée arrière 110 de blocage de l'organe d'étanchéité 90.

Le collier est par exemple formé d'au moins deux segments assemblés séparément sur la voûte d'extrémité 60, et liés entre eux par des organes de raccordement, notamment des systèmes de vis/boulons. Ceci facilite l'assemblage de l'organe de maintien 92 autour de la région d'extrémité 56.

En variante, le collier est formé d'un seul tenant, ce qui simplifie la fabrication de la butée arrière 110.

Des organes de fixation 111, notamment des vis sont montées à travers le rebord avant 104 et à travers la voûte d'extrémité 60 pour assurer la fixation de l'organe de maintien 92 sur la voûte d'extrémité 60.

La butée arrière 110 présente une forme convergente vers l'axe A-A' en se déplaçant de l'avant vers l'arrière. Elle est de forme complémentaire à la forme de la surface arrière 100 sur laquelle elle s'applique.

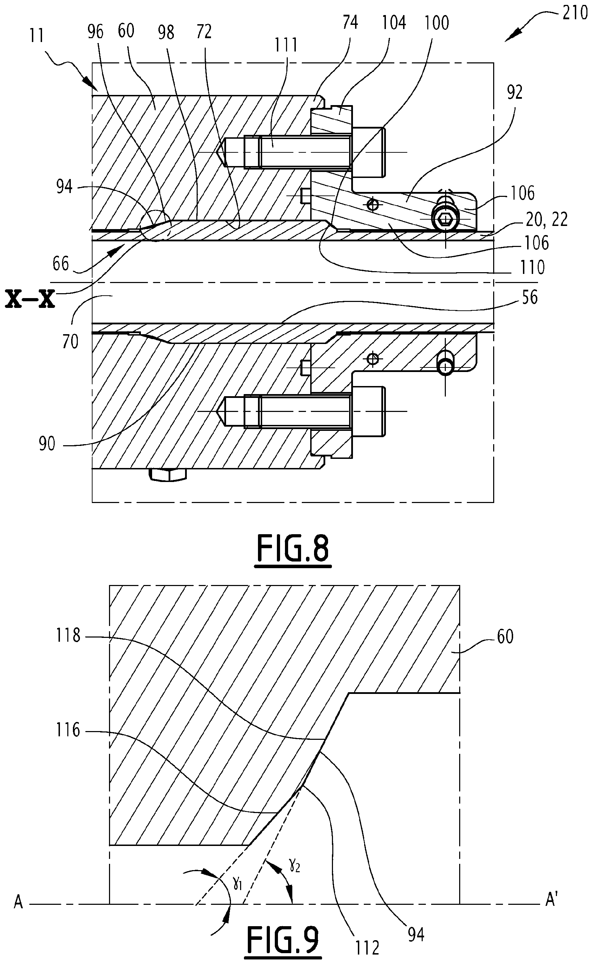

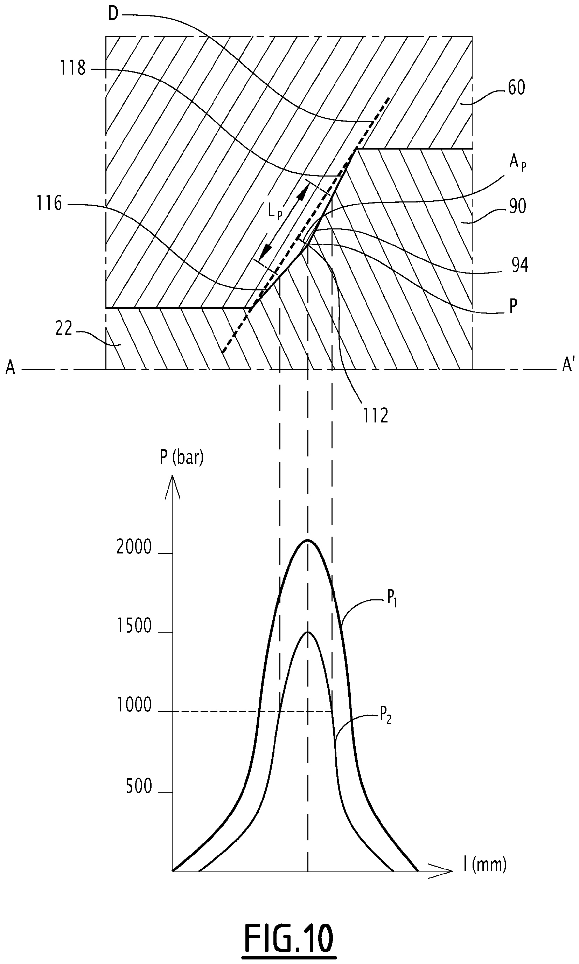

La portée 94 est de préférence conique divergeant de l'axe A-A' en se déplaçant de l'avant vers l'arrière. Avantageusement, comme illustré par la figure 9 et la figure 10, la portée 94 présente un relief 112 de sertissage faisant saillie vers l'axe A-A' pour s'insérer dans la surface avant 96 de l'organe d'étanchéité 90 sur au moins une circonférence autour de l'axe A-A'.

Le relief de sertissage 112 est par exemple défini entre une région tronconique avant 116 de la portée conique 94 présentant un demi-angle γ₁ au sommet avant et une région tronconique arrière 118, présentant un demi-angle γ₂ au sommet arrière supérieur à l'angle au sommet avant de la portée conique 96.

Avantageusement, la différence entre γ₂ et γ₁ est comprise entre 5° et 20° et plus avantageusement, est égale à 10°.

Généralement la valeur du demi-angle θ est comprise entre γ₁ et γ₂. Par exemple, selon un mode de réalisation avantageux, γ₂ est égal à 40°, γ₁ est égal à 30° et θ est égal à 37°.

L'ensemble arrière d'étanchéité 68 est disposé à l'arrière de l'organe annulaire de maintien 69. Il comporte au moins une bague arrière de sertissage sertissant la gaine externe 30.

En référence à la figure 2, l'organe annulaire de maintien 69 est disposé autour des éléments d'armure 50 de la nappe d'armures 25, au niveau de la partie arrière de l'embout 11. A l'emplacement de l'organe annulaire de maintien 69, les éléments d'armure 50 des couches d'armure 24, 25 sont enroulés hélicoïdalement avec le même rayon d'hélice que celui qu'ils ont au niveau du tronçon central 12.

La zone au niveau de laquelle les nappes d'armures 24, 25 s'écartent de manière hélicoïdale de l'axe A-A' de la conduite pour venir recouvrir une surface périphérique extérieure de la jupe arrière 74 de la voûte d'extrémité 60 est située entre l'organe annulaire de maintien 69 et l'avant de l'embout 11.

L'organe annulaire de maintien 69 se présente sous la forme d'un collier, et ne contribue pas significativement à la reprise des efforts de tension. Sa fonction est notamment d'empêcher la désorganisation des couches d'armure 24, 25 pendant le montage de l'embout 11.

L'embout 11 comporte en outre un matériau 114 de remplissage solide. Le matériau de remplissage 114 est disposé dans la chambre 64 autour de l'organe annulaire de maintien 69, de la voûte d'extrémité 60, et des tronçons d'extrémité 58 des éléments d'armure 50.

Avantageusement, le matériau de remplissage 114 remplit totalement la chambre 64.

Selon l'invention, le matériau de remplissage 114 comporte une résine polymérique thermodurcissable, en particulier une résine époxy.

La structure composite de renfort 22 de la conduite flexible 10 et l'organe d'étanchéité 90 sont fabriqués de préférence dans un poste de fabrication 160, après formation de la gaine tubulaire 20, comme représenté sur les figures 5 et 6.

Le poste de fabrication 160 comprend un plateau tournant 162 définissant un orifice central 164 de passage de la gaine tubulaire 20 ou/et de la structure composite de renfort 22 et au moins un dérouleur, de préférence une pluralité de dérouleurs 166, 168, portés par le plateau tournant 162.

Chaque dérouleur 166, 168 est propre à dérouler respectivement des bandes composites 44 destinées à former chaque couche de renfort ou/et des bandes polymères destinées à former l'organe d'étanchéité 90.

Chaque dérouleur 166, 168 comporte une bobine 170 sur laquelle est enroulée une bande, un organe 172 de guidage et d'application de la bande sur la gaine tubulaire 20 ou sur une couche formée autour de la gaine tubulaire 20, et un appareil de chauffage 174.

L'organe 172 de guidage et d'application comprend ici un galet d'application 173. L'appareil de chauffage comprend ici un laser de soudure.

Un procédé de fabrication de la conduite flexible 10 selon l'invention va maintenant être décrit.

Initialement, la gaine tubulaire 20 est formée, par exemple par extrusion. La gaine 20 est amenée dans le poste de fabrication 160 et est déplacée en translation à travers l'ouverture centrale 164.

Le plateau 162 est entraîné en rotation autour de l'axe de translation de la gaine 20. Les bandes composites 44 sont déroulées successivement des bobines 170 et sont amenées au contact de la gaine 20 ou d'une couche formée autour de la gaine 20 à l'aide de l'organe de guidage et d'application 172.

Une fois en contact, chaque bande composite 44 est enroulée suivant un angle d'enroulement choisi autour de la gaine 20 ou de la couche formée autour de la gaine 20 et est liée à cette couche par fusion engendrée par l'appareil de chauffage 174.

La structure composite de renfort 22 est ainsi formée.

Puis, les éléments d'armure 50 des nappes d'armures de traction 24, 25 sont enroulés autour de la structure composite de renfort 22, de manière non liée avec la structure composite de renfort 22. Avantageusement une couche anti-usure 26 est interposée entre la structure composite de renfort 22 et la première nappe d'armures de traction 24, et entre chaque paire de nappes d'armures de traction 24, 25.

Puis, un ruban de renfort 28 est enroulé autour de la nappe d'armures de traction 25 la plus à l'extérieur.

La gaine externe 30 est ensuite formée autour des nappes d'armures de traction 24, 25, de manière non liée avec les nappes d'armures 24, 25.

Avantageusement, toutes les couches situées à l'extérieur de la structure composite de renfort 22 sont non liées.

Ainsi, une conduite flexible 10 présentant un passage interne 13 dégagé et lisse est fabriquée par le procédé selon l'invention. Cette conduite flexible est de type « smooth bore », ce qui évite les perturbations sur l'écoulement du fluide traversant le passage interne 13. La conduite flexible 10 est particulièrement légère, puisqu'elle est dépourvue de carcasse interne métallique et de voûte de pression, grâce à la présence de la structure composite de renfort 22 liée à la gaine tubulaire 20.

Ceci fournit une bonne résistance à l'écrasement de la conduite 10, notamment aux très grandes profondeurs. En outre, la conduite 10 ne présente pas de problèmes de corrosion sous contrainte, notamment en présence de sulfure d'hydrogène. Elle présente une bonne résistance en température, et un diamètre externe plus faible pour des résistances comparables. Le diamètre de pose des nappes d'armures 24, 25 est également plus faible, ce qui limite les effets de flambement latéral.

Pour former l'embout 11, le capot 62 est tout d'abord introduit autour de la gaine externe 30 avec les pièces constituant l'ensemble arrière d'étanchéité 66.

Puis, une région avant de la gaine externe 30 est dénudée pour faire apparaître les éléments d'armure 50 des nappes d'armure 24, 25.

L'organe annulaire de maintien 69 et alors mis en place autour des nappes d'armure 24, 25. Puis, les éléments d'armure 50 sont repliés vers l'arrière.

L'organe d'étanchéité 90 est alors formé sur la région d'extrémité 56 de la structure composite de renfort 22. À cet effet, la région d'extrémité 56 est introduite à travers l'orifice central 164 du dispositif 160, et au moins une bande de polymère est enroulée autour de la structure composite de renfort 22, avec un angle proche de 90°, par exemple compris entre 70° et 90°. La région d'extrémité 56 est liée à la structure composite de renfort 22, et/ou à une couche enroulée autour de la structure composite de renfort 22, par fusion engendrée par l'appareil de chauffage 174.

Ceci étant fait, la surface avant 96 et la surface arrière 100 sont usinées pour adopter leur forme, ici une forme conique.

Ensuite, la voûte d'extrémité 60 est amenée vers la région d'extrémité 56, pour introduire la région d'extrémité 56 et l'organe d'étanchéité 90 dans le logement périphérique 72.

La portée 94 se rapproche de la surface avant 96, un jeu par exemple compris entre 2 mm et 4 mm pouvant subsister entre la portée 94 et la surface avant 96.

L'organe de maintien 92 est alors mis en place, avec la paroi périphérique 106 appliquée autour de la structure composite de renfort 22 et la butée arrière 110 au contact de la surface arrière 100.

Puis, l'organe de maintien 92 est déplacé vers l'avant pour le rapprocher de la voûte d'extrémité 60. Cette étape est réalisée par serrage des vis 111 et/ou à l'aide d'un outil de type vérin (non représenté). Le relief de sertissage 112 s'introduit dans l'organe d'étanchéité 90 générant localement une pression de contact supérieure ou égale à 1000 bars entre la surface avant 96 et la portée 94 complémentaire de la voûte d'extrémité 60, et avantageusement comprise entre 1800 bars et 2200 bars. Ceci créé un joint étanche sur au moins une circonférence autour de l'axe A-A'.

Pour atteindre ce niveau élevé de pression de contact, l'effort de serrage axial permettant de rapprocher la voûte d'extrémité 60 et l'organe de maintien 92 est élevé, typiquement supérieur à 150 kN. Par exemple, pour une conduite de diamètre intérieur égal à 40 mm, l'effort de serrage axial est avantageusement supérieur à 180 kN. Pour une conduite de diamètre intérieur égal à 200 mm, l'effort de serrage axial est avantageusement supérieur à 700 kN.

Une fois le serrage axial effectué, l'organe de maintien 92 est bloqué en position par rapport à la voûte d'extrémité 60, par exemple en bloquant les vis 111.

Ensuite, les éléments d'armure 50 sont repliés vers l'avant et s'appliquent sur la surface extérieure de la jupe 74. Le capot 62 est déplacé vers l'avant et est fixé par son bord avant 82 sur la voûte d'extrémité 60, pour refermer la chambre 64.

Un matériau de remplissage 114 est alors introduit sous forme fluide dans la chambre 64. Le matériau de remplissage 114 se solidifie dans la chambre 64, en noyant les tronçons d'extrémité 58 des éléments d'armure 50.

En référence à la figure 10, lors de la mise en service de la conduite flexible 10, la pression à l'intérieur de la conduite flexible 10 tend à diminuer la pression de contact entre la surface avant 96 et la portée 94 complémentaire de la voûte d'extrémité 60.

Cependant, selon l'invention, considérant la pression de contact initiale P1 (avant mise en service de la conduite flexible 10 et après serrage axial), la pression P2 après la mise en service de la conduite flexible 10 reste suffisante pour assurer l'étanchéité. Ainsi, avantageusement, la pression de contact après la mise en service de la conduite flexible entre la surface avant 96 et la portée 94 complémentaire de la voûte d'extrémité 60 est supérieure ou égale à 1000 bars. Le profil de pression représenté sur la figure 10 est par exemple obtenu pour une pression interne de 500 bar.

Avantageusement, la largeur Lp de la surface avant 96 sur laquelle s'applique une pression P2 supérieure à 1000 bars est supérieure à 3 mm, avantageusement comprise entre 3 mm et 5 mm.

Avantageusement, selon un exemple de réalisation dans lequel la structure de renfort 22 comprend une matrice formée de PEEK et des fibres de carbone noyées dans ladite matrice et dans lequel l'organe d'étanchéité 90 est constitué de PEEK, la voûte 60 étant métallique, le relief de sertissage 112 présente une amplitude Ap comprise entre 0,1 mm et 1 mm et avantageusement comprise entre 0,2 mm et 0,5 mm. L'amplitude Ap du relief de sertissage 112 représente la distance de la projection orthogonale du point P d'intersection entre le relief de sertissage 112 et un demi-plan de coupe axial médian de la conduite flexible, sur une droite D passant par l'extrémité avant de la région tronconique avant 116 et par l'extrémité arrière de la région tronconique arrière 118. Une telle amplitude Ap permet de générer une pression de contact supérieure ou égale à 1000 bars entre la surface avant 96 et la portée 94 complémentaire de la voûte d'extrémité 60, et avantageusement comprise entre 1800 bars et 2200 bars.

Grâce à l'invention qui vient être décrite, la structure composite de renfort 22 est fixée de manière robuste sur la voûte d'extrémité 60 de l'embout 11 par l'intermédiaire de l'organe d'étanchéité 90 et de l'organe de maintien 92 formant une butée 110 arrière coopérant avec la surface arrière 100 de l'organe d'étanchéité 90.

Par ailleurs, une étanchéité au fluide très efficace est réalisée par la coopération entre la portée 94 de la voûte d'extrémité 60 et la surface avant 96 conique de l'organe d'étanchéité 90.

Ceci est obtenu de manière simple, avec un procédé de montage limitant le nombre d'étapes à réaliser, et assurant une fiabilité élevée.

Dans une variante, non représentée, la portée 94 de la voûte d'extrémité 60 et la surface avant 96 de l'organe d'étanchéité 90 s'étendent à l'avant des tronçons d'extrémité 58 des éléments d'armure 50. Ceci évite de replier vers l'arrière les tronçons d'extrémité 58 lors de la mise en place de l'ensemble avant d'étanchéité 66.

Une deuxième conduite flexible 210 selon l'invention est illustrée par les figures 7 et 8. Comme pour la conduite flexible 10, la conduite flexible 210 comporte une gaine interne 20, une structure composite de renfort 22 liée à la gaine interne 20 et un embout 11 comprenant un ensemble avant d'étanchéité 66 tel que décrit plus haut.

Elle est par contre dépourvue de nappes d'armures et/ou de gaine externe 30. L'embout 11 est alors dépourvu de capot 62.

Comme pour la première conduite 10, la surface avant 96 de l'organe d'étanchéité 90 est maintenue appliquée contre la portée 94 de la voûte d'extrémité 60 par l'intermédiaire de l'organe de maintien 92 fixé sur la voûte d'extrémité 60.

Dans une variante, la portée 94 est dépourvue de relief de sertissage 112, la pression de contact sur la surface avant 96 de l'organe d'étanchéité 90 étant suffisante pour assurer l'étanchéité du montage sur au moins une circonférence autour de l'axe A-A'.

Dans une autre variante, la surface arrière 100 et la butée 110 s'étendent perpendiculairement à l'axe A-A'

Dans l'exemple mentionné plus haut où la conduite flexible est dépourvue de gaine tubulaire 20, la surface interne de la structure composite de renfort 22 délimite directement de manière étanche le passage interne 13.

Dans une variante de réalisation non représentée, la conduite flexible comprend une carcasse interne. La carcasse interne est formée d'un feuillard métallique profilé, enroulé en hélice. Les spires successives du feuillard métallique profilé sont agrafées les unes aux autres. La fonction de la carcasse est de reprendre les efforts radiaux d'écrasement.

La carcasse interne est disposée à l'intérieur de la gaine tubulaire 20. La surface interne de la carcasse interne délimite le passage interne 13. La conduite est dite à passage non lisse (« rough bore » en langue anglaise). Les couches décrites en lien avec la conduite flexible 10 représentée sur la figure 1 s'appliquent à cet exemple de réalisation.

Cette variante est notamment mise en œuvre lorsque la matrice polymérique de la structure composite de renfort 22 présente un module d'Young et une résistance au fluage insuffisants de sorte que la structure composite de renfort 22 n'est pas capable de supporter seule les efforts radiaux d'écrasement auxquels doit résister la conduite flexible. Ainsi, par exemple, cette variante est avantageuse lorsque la matrice polymérique de la structure composite de renfort comporte un polymère fluoré tel qu'un polyfluorure de vinylidène (PVDF) ou un polyamide tel qu'un PA11, de sorte que le module d'Young de ladite matrice polymérique mesuré à 23°C est inférieur ou égal à 1 GPa.

Dans une variante, pour réduire les efforts de traction s'exerçant sur la structure composite de renfort 22, au moins une partie de la surface externe de la structure composite de renfort 22 est revêtue d'un lubrifiant pour réduire le coefficient de frottement entre la structure composite de renfort 22 et les structures adjacentes, comme l'organe de maintien 92.

Par ailleurs, des bandes anti-usures sont optionnellement enroulées autour d'au moins une partie de la surface externe de la structure composite de renfort 22. Par exemple, les bandes anti-usures sont enroulées entre les nappes d'armures 24, 25 et la structure composite de renfort 22, ce qui favorise le déplacement axial de la structure composite de renfort 22.

Dans une variante (non représentée), la région d'extrémité 56 comprend une bague d'isolation électrique, de préférence disposée du côté avant de l'organe d'étanchéité 90.

Avantageusement, la bague d'isolation électrique renforce l'étanchéité de l'embout 11 vis-à-vis d'une éventuelle migration du fluide du passage interne 13 vers le la structure de renfort 22.

Selon une variante, le demi-angle α au sommet du cône engendrant la surface arrière 100 est compris entre 60° et 70°.

Selon une autre variante, la surface arrière 100 est perpendiculaire à l'axe A-A'. Cette configuration réduit les contraintes au sein de la structure composite de renfort 22.

Selon cette variante, préférentiellement, la surface arrière 100 présente une transition courbe avec la région d'extrémité 56, par exemple une transition sensiblement continûment dérivable, pris en coupe suivant un plan axial médian de la conduite flexible 10.

Ceci réduit les contraintes au sein de la surface arrière 100.

Alternativement, la surface arrière 100 présente une première région tronconique avant présentant un premier demi-angle au sommet et une deuxième région tronconique arrière présentant un deuxième demi-angle au sommet inférieur au premier demi-angle au sommet. Cette surface 100 réduit également les contraintes au sein de la surface arrière 100 tout en facilitant la fabrication de l'organe d'étanchéité 90.

Dans une variante du mode de réalisation dans lequel le collier constituant l'organe de maintien 92 est formé d'au moins deux segments assemblés séparément sur la voûte d'extrémité 60, et liés entre eux par des organes de raccordement, l'organe de maintien 92 comporte en outre une paroi périphérique avant destinée à s'engager autour de l'organe d'étanchéité 90. La paroi périphérique avant fait saillie axialement à l'avant du rebord 104. Elle guide l'organe de maintien 92 lors de son montage, en s'insérant dans un espace annulaire entre la jupe 74 et l'organe d'étanchéité 90.

En outre, pour améliorer l'étanchéité de l'embout 11 sous l'effet de la pression externe, un joint d'étanchéité est agencé entre le bord arrière de la jupe 74 de la voûte d'extrémité 60 et le bord avant de la paroi périphérique avant de l'organe de maintien 92. Le joint d'étanchéité est par exemple un joint de face. Avantageusement, lorsque le joint de face est utilisé, la surface arrière 100 est non perpendiculaire à l'axe central A-A'. Alternativement, pour améliorer l'étanchéité de l'embout 11 sous l'effet de la pression externe, un joint de piston est agencé entre la jupe 74 et l'organe d'étanchéité 90.

Dans une autre variante, l'organe d'étanchéité 90 est formé par fabrication additive (désignée par le terme « impression 3D »), à l'écart de la région d'extrémité 56.

Puis, l'organe d'étanchéité 90 est appliqué sur la région d'extrémité 56 et est lié à la région d'extrémité 56 par collage ou fusion.

Pour assurer un ajustement serré de l'organe d'étanchéité 90 sur la région d'extrémité 56, cette dernière est dilatée ou comprimée.

De façon alternative, l'organe d'étanchéité 90 est directement formé par fabrication additive autour de la région d'extrémité 56.

Selon encore une autre alternative, l'organe d'étanchéité 90 est réalisé par moulage par injection, compression, pultrusion ou extrusion, puis est usiné pour obtenir la surface avant 96 et la surface arrière 100 de forme conique. L'organe d'étanchéité 90 est alors appliqué sur la région d'extrémité 56, puis est lié par collage ou fusion.

## Revendications

1. Embout (11) de fixation d'une conduite flexible (10 ; 210) de transport de fluide, la conduite flexible (10 ; 210) définissant un passage interne (13) de circulation de fluide d'axe central (A-A'), la conduite flexible (10 ;210) comportant une structure composite de renfort (22) tubulaire, la structure composite de renfort (22) comportant au moins une couche de renfort comprenant une matrice (40) en polymère et des fibres de renfort (42), l'embout (11) comportant :
- une voûte d'extrémité (60) ;
- une région d'extrémité (56) de la structure composite de renfort (22) d'axe central (A-A') ;
- un organe de maintien (92), propre à maintenir la région d'extrémité (56) de la structure composite de renfort (22) fixée contre la voûte d'extrémité (60) ;
- un organe d'étanchéité (90) ;
**caractérisé en ce que** l'organe d'étanchéité (90) fait saillie radialement autour de la région d'extrémité (56) de la structure composite de renfort (22), en étant lié à la région d'extrémité (56) de la structure composite de renfort (22), l'organe d'étanchéité (90) présentant une surface avant (96) non perpendiculaire à l'axe central (A-A'), la surface avant (96) coopérant avec une portée (94) complémentaire sur la voûte d'extrémité (60), l'organe d'étanchéité (90) présentant une surface arrière (100) appliquée contre une butée (110) de l'organe de maintien (92).

2. Embout (11) selon la revendication 1, dans lequel la surface arrière (100) est une surface non perpendiculaire à l'axe central (A-A'), avantageusement une surface conique, la butée (110) définissant une surface complémentaire à la surface arrière (100).

3. Embout (11) selon l'une quelconque des revendications précédentes, dans lequel la portée (94) complémentaire sur la voûte d'extrémité (60) présente un relief de sertissage (112) inséré dans l'organe d'étanchéité (90),
dans lequel optionnellement, la portée (94) complémentaire sur la voûte d'extrémité (60) comporte :
- une région tronconique avant (116) présentant un demi-angle (γ₁) au sommet avant, et
- une région tronconique arrière (118), présentant un demi-angle au sommet (γ₂) arrière supérieur au demi-angle au sommet (γ₁) avant,
le relief de sertissage (112) étant défini entre la région tronconique avant (116) et la région tronconique arrière (118).

4. Embout (11) selon l'une quelconque des revendications précédentes, dans lequel l'organe d'étanchéité (90) présente, entre la surface avant (96) et la surface arrière (100), une surface périphérique extérieure (98) cylindrique raccordant la surface avant (96) à la surface arrière (100), la longueur de la surface périphérique extérieure (98), prise parallèlement à l'axe central (A-A') étant avantageusement supérieure ou égale à 30 mm, notamment comprise entre 75 mm et 300 mm et préférentiellement comprise entre 75 mm et 100 mm.

5. Embout (11) selon l'une quelconque des revendications précédentes, dans lequel l'organe d'étanchéité (90) comporte au moins une région extérieure formée en polymère dépourvue de fibres, notamment une région formée du même polymère que la matrice (40) en polymère, la surface avant (96) coopérant avec la portée complémentaire (94) étant délimitée dans la région extérieure formée en polymère dépourvue de fibres,
dans lequel optionnellement, l'épaisseur de la région extérieure est avantageusement supérieure ou égale à 0,5 mm, plus avantageusement supérieure ou égale à 1 mm, et préférentiellement comprise entre 2 mm et 10 mm.

6. Embout (11) selon la revendication 5, dans lequel le polymère est un thermoplastique semi-cristallin présentant une température de transition vitreuse Tg supérieure à 80°C, préférentiellement supérieure à 130°C, ledit polymère présentant un module d'Young mesuré à 23°C selon la Norme ASTM D638 supérieur à 3 GPa, préférentiellement supérieur à 4 GPa.

7. Embout (11) selon l'une quelconque des revendications 1 à 6, dans lequel l'organe d'étanchéité (90) est constitué de polymère, en étant totalement dépourvu de fibres de renfort
dans lequel, optionnellement, l'organe d'étanchéité (90) est constitué de polymère thermoplastique semi-cristallin présentant une température de transition vitreuse Tg supérieure à 80°C, préférentiellement supérieure à 130°C, ledit polymère présentant un module d'Young mesuré à 23°C selon la Norme ASTM D638 supérieur à 3 GPa, préférentiellement supérieur à 4 GPa.

8. Embout (11) selon l'une quelconque des revendications précédentes, dans lequel l'organe d'étanchéité (90) est lié chimiquement ou/et par fusion à la région d'extrémité (56) de la structure composite de renfort (22).

9. Embout (11) selon l'une quelconque des revendications précédentes, comprenant une région d'extrémité d'une gaine tubulaire (20) de la conduite flexible la région d'extrémité de la gaine tubulaire (20) définissant le passage interne (13), la région d'extrémité de la structure composite de renfort (22) tubulaire étant appliquée sur la région d'extrémité de la gaine tubulaire (20) à l'extérieur de la gaine tubulaire (20) en étant liée à la gaine tubulaire (20).

10. Embout (11) selon l'une quelconque des revendications précédentes, comportant des tronçons d'extrémité (58) d'éléments d'armure (50) de la conduite flexible (10 ; 210), l'embout (11) comportant un capot externe (62), délimitant avec la voûte d'extrémité (60) une chambre (64) de réception des tronçons d'extrémité (58), avantageusement remplie d'un matériau de remplissage solide (114) noyant les tronçons d'extrémité (58).

11. Conduite flexible (10 ; 210) définissant un passage interne (13) de circulation de fluide d'axe central (A-A'), la conduite flexible (10 ; 210) comportant :
- une structure composite de renfort (22) tubulaire, la structure composite de renfort (22) comportant au moins une couche de renfort comprenant une matrice (40) en polymère et des fibres de renfort (42),
- un embout (11) selon l'une quelconque des revendications précédentes, monté à l'extrémité de la conduite flexible (10 ; 210).

12. Procédé de fabrication d'un embout (11) d'une conduite flexible (10 ; 210) de transport de fluide selon l'une quelconque des revendications 1 à 10, comprenant les étapes suivantes :
- fourniture d'une conduite flexible (10 ; 210), définissant un passage interne (13) de circulation de fluide d'axe central (A-A'), la conduite flexible (10 ; 210) comportant une structure composite de renfort (22), la structure composite de renfort (22) comportant au moins une couche de renfort comprenant une matrice (40) en polymère et des fibres de renfort (42),
- fourniture d'une voûte d'extrémité (60)
- dégagement d'une région d'extrémité (56) de la structure composite de renfort (22) ;
- montage d'un organe de maintien (92), propre à maintenir la région d'extrémité (56) de la structure composite de renfort (22) fixée contre la voûte d'extrémité (60) ;
**caractérisé par** l'étape suivante :
- fourniture d'un organe d'étanchéité (90) faisant saillie radialement autour de la région d'extrémité (56) de la structure composite de renfort (22), en étant lié à la région d'extrémité (56) de la structure composite de renfort (22),
- mise en contact d'une surface avant (96) non perpendiculaire à l'axe central (A-A') de l'organe d'étanchéité (90) avec une portée (94) complémentaire sur la voûte d'extrémité (60), et
- mise en contact d'une surface arrière (100) de l'organe d'étanchéité (90) contre une butée (110) de l'organe de maintien (92).

13. Procédé selon la revendication 12, comprenant les étapes suivantes :
- déplacement de l'organe de maintien (92) vers l'avant pour rapprocher l'organe de maintien (92) de la voûte d'extrémité (60), une pression de contact supérieure ou égale à 1000 bars étant avantageusement engendrée entre la surface avant (96) et la portée (94) complémentaire sur la voûte d'extrémité (60) ;
- blocage en position de l'organe de maintien (92) par rapport à la voûte d'extrémité (60).

14. Procédé selon l'une quelconque des revendications 12 ou 13, dans lequel la fourniture de l'organe d'étanchéité (90) comporte la formation et la fixation simultanée de l'organe d'étanchéité (90) autour de la région d'extrémité (56) de la structure composite de renfort (22),
dans lequel optionnellement, la formation et la fixation simultanée de l'organe d'étanchéité (90) comporte l'enroulement autour de la structure composite de renfort (22) et la fusion sur la structure composite de renfort (22) d'au moins une bande de matériau polymère, puis la solidification de la bande de matériau polymère, le procédé comportant avantageusement l'usinage de la surface avant (96) non perpendiculaire à l'axe central (A-A') après solidification.

15. Procédé selon l'une quelconque des revendications 12 à 14, dans lequel la conduite flexible (10 ; 210) comprend au moins une nappe d'armures de traction (24, 25) non liée à la structure composite de renfort (22), la ou chaque nappe d'armures de traction (24, 25) comprenant au moins un élément d'armure (50) enroulé autour de la structure composite de renfort (22), le procédé comportant le dégagement de tronçons d'extrémité (58) d'éléments d'armure (50), puis, après le montage de l'organe de maintien (92), l'insertion des tronçons d'extrémité (58) dans une chambre (64) ménagée entre la voûte d'extrémité (60) et un capot externe (62), et avantageusement l'injection et la solidification d'un matériau de remplissage (114) noyant les tronçons d'extrémité (58) dans la chambre (64).

## Patentansprüche

1. Endstück (11) zum Befestigen einer flexiblen Leitung (10; 210) zum Transportieren eines Fluids, wobei die flexible Leitung (10; 210) einen inneren Durchgang (13) zum Zirkulieren von Fluid mit einer Mittelachse (A-A') definiert, die flexible Leitung (10; 210) umfassend eine rohrförmige Verbundverstärkungsstruktur (22), die Verbundverstärkungsstruktur (22) umfassend mindestens eine Verstärkungsschicht, umfassend eine Polymermatrix (40) und Verstärkungsfasern (42), das Endstück (11) umfassend:
- eine Endwölbung (60);
- eine Endregion (56) der Verbundverstärkungsstruktur (22) mit einer Mittelachse (A-A');
- ein Halteelement (92), das geeignet ist, um die Endregion (56) der Verbundverstärkungsstruktur (22) fixiert an der Endwölbung (60) zu halten;
- ein Dichtungselement (90);
**dadurch gekennzeichnet, dass** das Dichtungselement (90) radial um die Endregion (56) der Verbundverstärkungsstruktur (22) hervorsteht und mit der Endregion (56) der Verbundverstärkungsstruktur (22) verbunden ist, wobei das Dichtungselement (90) eine vordere Fläche (96) aufweist, die nicht senkrecht zu der Mittelachse (A-A') ist, wobei die vordere Fläche (96) mit einer komplementären Auflagefläche (94) an der Endwölbung (60) zusammenwirkt, wobei das Dichtungselement (90) eine hintere Fläche (100) aufweist, die an einem Anschlag (110) des Halteelements (92) anliegt.

2. Endstück (11) nach Anspruch 1, wobei die hintere Fläche (100) eine Fläche ist, die nicht senkrecht zu der Mittelachse (A-A') ist, vorteilhafterweise eine konische Fläche, wobei der Anschlag (110) eine Fläche definiert, die komplementär zu der hinteren Fläche (100) ist.

3. Endstück (11) nach einem der vorherigen Ansprüche, wobei die komplementäre Auflagefläche (94) an der Endwölbung (60) ein in das Dichtungselement (90) eingesetztes Crimp-Relief (112) aufweist,
wobei optional die komplementäre Auflagefläche (94) an der Endwölbung (60) Folgendes umfasst:
- einen vorderen Kegelstumpfbereich (116), der einen Halbwinkel (γ₁) an der vorderen Spitze aufweist, und
- einen hinteren Kegelstumpfbereich (118), der einen hinteren Halbwinkel an der Spitze (γ₂) aufweist, der größer ist als der vordere Halbwinkel an der Spitze (γ₁),
wobei das Crimp-Relief (112) zwischen dem vorderen Kegelstumpfbereich (116) und dem hinteren Kegelstumpfbereich (118) definiert ist.

4. Endstück (11) nach einem der vorherigen Ansprüche, wobei das Dichtungselement (90) zwischen der vorderen Fläche (96) und der hinteren Fläche (100) eine zylindrische Außenumfangsfläche (98) aufweist, die die vordere Fläche (96) mit der hinteren Fläche (100) verbindet, wobei die Länge der Außenumfangsfläche (98) parallel zu der Mittelachse (A-A') vorteilhafterweise größer als oder gleich wie 30 mm, insbesondere zwischen 75 mm und 300 mm und vorzugsweise zwischen 75 mm und 100 mm ist.

5. Endstück (11) nach einem der vorherigen Ansprüche, wobei das Dichtungselement (90) mindestens einen äußeren faserfreien Polymerbereich aufweist, insbesondere einen Bereich, der aus dem gleichen Polymer wie die Polymermatrix (40) gebildet ist, wobei die vordere Fläche (96), die mit der komplementären Auflagefläche (94) zusammenwirkt, in der äußeren faserfreien Polymerregion begrenzt ist,
wobei optional die Stärke der äußeren Region vorteilhafterweise größer als oder gleich wie 0,5 mm, vorteilhafterweise größer als oder gleich wie 1 mm und vorzugsweise zwischen 2 mm und 10 mm ist.

6. Endstück (11) nach Anspruch 5, wobei das Polymer ein teilkristalliner Thermoplast mit einer Glasübergangstemperatur Tg von mehr als 80 °C, vorzugsweise mehr als 130 °C, ist, wobei das Polymer einen Youngschen Modul, gemessen bei 23 °C gemäß ASTM D638, von mehr als 3 GPa, vorzugsweise mehr als 4 GPa, aufweist.

7. Endstück (11) nach einem der Ansprüche 1 bis 6, **dadurch gekennzeichnet, dass** das Dichtungselement (90) aus einem Polymer besteht, das vollkommen frei von Verstärkungsfasern ist
wobei optional das Dichtungselement (90) aus einem teilkristallinen thermoplastischen Polymer mit einer Glasübergangstemperatur Tg von mehr als 80 °C, vorzugsweise mehr als 130 °C, hergestellt ist, wobei das Polymer einen Youngschen Modul, gemessen bei 23 °C gemäß ASTM Standard D638, von mehr als 3 GPa, vorzugsweise mehr als 4 GPa, aufweist.

8. Endstück (11) nach einem der vorherigen Ansprüche, wobei das Dichtungselement (90) chemisch oder/und durch Schmelzen mit der Endregion (56) der Verbundverstärkungsstruktur (22) verbunden ist.

9. Endstück (11) nach einem der vorherigen Ansprüche, umfassend eine Endregion eines rohrförmigen Mantels (20) der flexiblen Leitung, wobei die Endregion des rohrförmigen Mantels (20) den inneren Durchgang (13) definiert, wobei die Endregion der rohrförmigen Verbundverstärkungsstruktur (22) auf der Endregion des rohrförmigen Mantels (20) außerhalb des rohrförmigen Mantels (20) aufgebracht ist und mit dem rohrförmigen Mantel (20) verbunden ist.

10. Endstück (11) nach einem der vorherigen Ansprüche, mit Endabschnitten (58) von Verstärkungselementen (50) der flexiblen Leitung (10; 210), wobei das Endstück (11) eine äußere Abdeckung (62) aufweist, die mit der Endwölbung (60) eine Kammer (64) zum Aufnehmen der Endabschnitte (58) begrenzt, die vorteilhafterweise mit einem festen Füllmaterial (114) gefüllt ist, das die Endabschnitte (58) einbettet.

11. Flexible Leitung (10; 210), die einen internen Fluidströmungsdurchgang (13) mit einer Mittelachse (A-A') definiert, die flexible Leitung (10; 210) umfassend:
- eine rohrförmige Verbundverstärkungsstruktur (22), die Verbundverstärkungsstruktur (22) umfassend mindestens eine Verstärkungsschicht, umfassend eine Polymermatrix (40) und Verstärkungsfasern (42),
- ein Endstück (11) nach einem der vorherigen Ansprüche, das an dem Ende der flexiblen Leitung (10; 210) montiert ist.

12. Verfahren zum Herstellen eines Endstücks (11) einer flexiblen Fluidtransportleitung (10; 210) nach einem der Ansprüche 1 bis 10, umfassend die folgenden Schritte:
- Bereitstellen einer flexiblen Leitung (10; 210), die einen inneren Fluidströmungsdurchgang (13) mit Mittelachse (A-A') definiert, die flexible Leitung (10; 210) umfassend eine Verbundverstärkungsstruktur (22), die Verbundverstärkungsstruktur (22) umfassend mindestens eine Verstärkungsschicht, umfassend eine Polymermatrix (40) und Verstärkungsfasern (42),
- Bereitstellen einer Endwölbung (60)
- Freilegen einer Endregion (56) der Verbundverstärkungsstruktur (22);
- Anbringen eines Halteelements (92), das geeignet ist, um die Endregion (56) der Verbundverstärkungsstruktur (22) fest an der Endwölbung (60) zu halten;
**gekennzeichnet durch** den folgenden Schritt:
- Bereitstellen eines Dichtungselements (90), das radial um die Endregion (56) der Verbundverstärkungsstruktur (22) hervorsteht und mit der Endregion (56) der Verbundverstärkungsstruktur (22) verbunden ist,
- Inkontaktbringen einer vorderen Fläche (96), die nicht senkrecht zu der Mittelachse (A-A') des Dichtungselements (90) ist, mit einer komplementären Auflagefläche (94) an der Endwölbung (60), und
- Inkontaktbringen einer hinteren Fläche (100) des Dichtungselements (90) an einem Anschlag (110) des Halteelements (92).

13. Verfahren nach Anspruch 12, umfassend die folgenden Schritte:
- Verlagern des Halteelements (92) nach vorne, um das Halteelement (92) der Endwölbung (60) anzunähern, wobei zwischen der vorderen Fläche (96) und der komplementären Auflagefläche (94) an der Endwölbung (60) vorteilhafterweise ein Anpressdruck größer als oder gleich wie 1000 bar erzeugt wird;
- Blockierung der Position des Halteelements (92) in Bezug auf die Endwölbung (60).

14. Verfahren nach einem der Ansprüche 12 oder 13, wobei das Bereitstellen des Dichtungselements (90) die gleichzeitige Bildung und Befestigung des Dichtungselements (90) um die Endregion (56) der Verbundverstärkungsstruktur (22) umfasst,
wobei optional die gleichzeitige Bildung und Befestigung des Dichtungselements (90) ein Umwickeln der Verbundverstärkungsstruktur (22) und das Verschmelzen mit der Verbundverstärkungsstruktur (22) mindestens eines Streifens aus polymerem Material und das anschließende Verfestigen des Streifens aus polymerem Material umfasst, wobei das Verfahren vorteilhafterweise das Bearbeiten der nicht senkrecht zur Mittelachse (A-A') befindlichen vorderen Fläche (96) nach Verfestigen umfasst.

15. Verfahren nach einem der Ansprüche 12 bis 14, wobei die flexible Leitung (10; 210) mindestens eine Zugverstärkungslage (24, 25) umfasst, die nicht mit der Verbundverstärkungsstruktur (22) verbunden ist, die oder jede Zugverstärkungslage (24, 25) umfassend mindestens ein Verstärkungselement (50), das um die zusammengesetzte Verstärkungsstruktur (22) gewickelt ist, das Verfahren umfassend das Lösen von Endabschnitten (58) der Verstärkungselemente (50), dann, nach Montage des Halteelements (92), Einsetzen der Endabschnitte (58) in eine Kammer (64), die zwischen der Endwölbung (60) und einer äußeren Abdeckung (62) gebildet ist, und vorteilhafterweise Einspritzen und Verfestigen eines Füllmaterials (114), das die Endabschnitte (58) in die Kammer (64) einbettet.

## Claims

1. End piece (11) for fixing a flexible pipe (10; 210) for conveying fluid, the flexible pipe (10; 210) defining an internal passage (13) for circulating fluid with a central axis (A-A'), the flexible pipe (10; 210) comprising a tubular composite reinforcing structure (22), the composite reinforcing structure (22) comprising at least one reinforcing layer comprising a matrix (40) of polymer and reinforcing fibers (42), the end piece (11) comprising:
- an end vault (60);
- an end region (56) of the composite reinforcing structure (22) with a central axis (A-A');
- a holding member (92), suitable for holding the end region (56) of the composite reinforcing structure (22) fixed against the end vault (60);
- a sealing member (90);
**characterized in that** the sealing member (90) projects radially around the end region (56) of the composite reinforcing structure (22), being bonded to the end region (56) of the composite reinforcing structure (22), the sealing member (90) having a front surface (96) not perpendicular to the central axis (A-A'), the front surface (96) interacting with a complementary bearing surface (94) on the end vault (60), the sealing member (90) having a rear surface (100) applied against a stop (110) of the holding member (92).

2. End piece (11) according to claim 1, in which the rear surface (100) is a surface not perpendicular to the central axis (A-A'), advantageously a conical surface, the stop (110) defining a surface complementary to the rear surface (100).

3. End piece (11) according to any one of the preceding claims, in which the complementary bearing surface (94) on the end vault (60) has a crimping relief (112) inserted in the sealing member (90),
in which optionally, the complementary bearing surface (94) on the end vault (60) comprises:
- a front frustoconical region (116) having a front half-angle (γ₁) at the apex, and
- a rear frustoconical region (118), having a rear half-angle at the apex (γ₂) greater
than the front half-angle at the apex (γ₁),
the crimping relief (112) being defined between the front frustoconical region (116) and the rear frustoconical region (118).

4. End piece (11) according to any one of the preceding claims, in which the sealing member (90) has, between the front surface (96) and the rear surface (100), an outer cylindrical peripheral surface (98) connecting the front surface (96) to the rear surface (100), the length of the external peripheral surface (98), taken parallel to the central axis (A-A') being advantageously greater than or equal to 30 mm, in particular between 75 mm and 300 mm, and preferably between 75 mm and 100 mm.

5. End piece (11) according to any one of the preceding claims, in which the sealing member (90) comprises at least one outer region formed of polymer free of fibers, in particular a region formed of the same polymer as the matrix (40) made of polymer, the front surface (96) interacting with the complementary surface (94) being delimited in the outer region formed of polymer free of fibers,
wherein optionally, the thickness of the outer region is advantageously greater than or equal to 0.5 mm, more advantageously greater than or equal to 1 mm, and preferably between 2 mm and 10 mm.

6. End piece (11) according to claim 5, wherein the polymer is a semi-crystalline thermoplastic having a glass transition temperature Tg greater than 80°C, preferably greater than 130°C, said polymer having a Young's modulus measured at 23°C according to Standard ASTM D638 greater than 3 GPa, preferably greater than 4 GPa.

7. End piece (11) according to any one of claims 1 to 6, wherein the sealing member (90) is made of polymer, being completely free of reinforcing fibers, in which optionally, the sealing member (90) consists of semi-crystalline thermoplastic polymer having a glass transition temperature Tg greater than 80°C, preferably greater than 130°C , said polymer having a Young's modulus measured at 23°C according to Standard ASTM D638, greater than 3 GPa, preferably greater than 4 GPa.

8. End piece (11) according to any one of the preceding claims, in which the sealing member (90) is chemically bonded and/or by fusion to the end region (56) of the composite reinforcing structure (22).

9. End piece (11) according to any one of the preceding claims, comprising an end region of a tubular sheath (20) of the flexible pipe, the end region of the tubular sheath (20) defining the internal passage (13), the end region of the tubular composite reinforcing structure (22) being applied to the end region of the tubular sheath (20) outside the tubular sheath (20) by being bonded to the tubular sheath (20).

10. End piece (11) according to any one of the preceding claims, comprising end sections (58) of armor elements (50) of the flexible pipe (10; 210), the end piece (11) comprising an external cover (62), delimiting with the end vault (60) a chamber (64) for receiving the end sections (58), advantageously filled with a solid filling material (114) embedding the end sections (58).

11. Flexible pipe (10; 210) defining an internal passage (13) for circulation of fluid of the central axis (A-A'), the flexible pipe (10; 210) comprising:
- a tubular composite reinforcing structure (22), the composite reinforcing structure (22) comprising at least one reinforcing layer comprising a matrix (40) of polymer and reinforcing fibers (42),
- an end piece (11) according to any one of the preceding claims, mounted at the end of the flexible pipe (10; 210).

12. Method for manufacturing an end piece (11) of a flexible pipe (10; 210) for conveying fluid according to any one of claims 1 to 10, comprising the following steps:
- supply of a flexible pipe (10; 210), defining an internal passage (13) for circulation of fluid of the central axis (A-A'), the flexible pipe (10; 210) comprising a composite reinforcing structure (22), the composite reinforcing structure (22) comprising at least one reinforcing layer comprising a matrix (40) of polymer and reinforcing fibers (42),
- supply of an end vault (60)
- clearance of an end region (56) of the composite reinforcing structure (22);
- mounting of a holding member (92), capable of holding the end region (56) of the composite reinforcing structure (22) fixed against the end vault (60);
**characterized by** the following step:
- providing a sealing member (90) projecting radially around the end region (56) of the composite reinforcing structure (22), being bonded to the end region (56) of the structure composite reinforcing (22),
- bringing a front surface (96) not perpendicular to the central axis (A-A') of the sealing member (90) into contact with a complementary bearing surface (94) on the end vault (60), and
- bringing a rear surface (100) of the sealing member (90) into contact with a stop (110) of the holding member (92).

13. Method according to claim 12, comprising the following steps:
- displacement of the holding member (92) forward to bring the holding member (92) closer to the end vault (60), a contact pressure greater than or equal to 1000 bar being advantageously generated between the front surface (96) and the complementary bearing surface (94) on the end vault (60);
- locking in position of the holding member (92) relative to the end vault (60).

14. Method according to any one of claims 13 or 13, wherein the providing of the sealing member (90) comprises the formation and the simultaneous fixing of the sealing member (90) around the end region (56) of the composite reinforcing structure (22),
wherein optionally, the simultaneous formation and fixing of the sealing member (90) comprises winding around the composite reinforcing structure (22) and melting on the composite reinforcing structure (22) of at least one strip of polymeric material, then the solidification of the strip of polymeric material, the method advantageously comprising the machining of the front surface (96) not perpendicular to the central axis (A-A') after solidification.

15. Method according to any one of claims 12 to 14, wherein the flexible pipe (10; 210) comprises at least one ply of tensile armor (24, 25) not bonded to the composite reinforcing structure (22), the, or each, ply of tensile armor (24, 25) comprising at least one armor element (50) wound around the composite reinforcing structure (22), the method comprising the c of end sections (58) of the armor elements (50), then, after the mounting of the holding member (92), the insertion of the end sections (58) in a chamber (64) formed between the end vault (60) and an outer cover (62), and advantageously the injection and solidification of a filling material (114) embedding the end sections (58) in the chamber (64).
